# EUROPÄISCHE PATENTSCHRIFT

(11) **EP 0 793 868 B1**
(45) Veröffentlichungstag und Bekanntmachung des Hinweises auf die Patenterteilung: **20.01.1999**
(21) Anmeldenummer: 95937774.8
(22) Anmeldetag: 16.11.1995
(51) Int. Cl.: H02H 3/347, H02H 3/33, H02H 3/05, G01R 15/18

(54) **FEHLERSTROMSCHUTZSCHALTER MIT EINEM SUMMENSTROMWANDLER**
FAULT CURRENT BREAKER WITH A CUMULATIVE CURRENT CONVERTER
DISJONCTEUR A COURANT RESIDUEL AVEC TRANSFORMATEUR SOMMATEUR DE COURANT

(30) Priorität: 21.11.1994 DE 9418595 U
(43) Veröffentlichungstag der Anmeldung: 10.09.1997
(73) Patentinhaber: SIEMENS AKTIENGESELLSCHAFT, 80333 München (DE)
(72) Erfinder: POHL, Felix, D-91058 Erlangen (DE)
(86) Internationale Anmeldenummer: DE9501601
(87) Internationale Veröffentlichungsnummer: WO9616459

(56) Entgegenhaltungen:
- DE-A- 2 555 302
- GB-A- 1 515 563
- GB-A- 2 251 741
- US-A- 4 276 510
- BULLETIN DES SCHWEIZERISCHEN ELEKTROTECHNISCHEN VEREINS/DES VERBANDES SCHWEIZERISCHER ELEKTRIZITÄTSWERKE, Bd. 73, Nr. 9, 8.Mai 1982 Seiten 400-408, XP 000567285 M.TAYEFEH-EMAMVERDI 'FI-SCHALTER FÜR GLEICHFEHLERSTRÖME'
- IBM TECHNICAL DISCLOSURE BULLETIN, Bd. 28, Nr. 9, Februar 1986 NEW YORK, US, Seiten 3788-3792, ANONYMOUS 'Compensation of a Multiplexed Array Recording Head for Magnetic Printing'

## Beschreibung

Die Erfindung bezieht sich auf einen Fehlerstromschutzschalter mit einem Summenstromwandler in Form eines mit einer Wicklung versehenen Ringkernes zum Umschließen stromdurchflossener Leiter, wobei über die Wicklung eine Auswerteschaltung mit einem Differenzverstärker angesteuert ist und wobei die Wicklung mit einer Mittelanzapfung versehen ist, welche die Wicklung in Teilwicklungen aufteilt und an positiver Betriebsspannung liegt.

Ein Fehlerstromschutzschalter wird im allgemeinen vom Ausgangssignal eines Summenstromwandlers angesteuert. Letzterer besteht vorteilhafterweise aus einem mit einer Spule bewickelten Ringkern, wobei die als Sekundärwicklung wirkende Spule noch mit einer Bürde belastet sein kann. Durch den Innenraum des Ringkernes werden stromdurchflossene Leiter, beispielsweise mit den Phasen R, S, T und dem Nulleiter, geführt. Tritt infolge eines Defektes ein Stromfluß von einem oder mehreren der Phasen nach Erde auf, ist der Summenstrom von R, S, T und 0 ungleich Null und es wird in der Wicklung eine Spannung induziert. Diese Spannung kann von einer Auswerteschaltung detektiert und zur Abschaltung eines elektrischen Netzes ausgenutzt werden.

Solche Fehlerstromschutzschalter sind vom Stand der Technik bekannt. Im allgemeinen ist dabei die Wicklung geerdet und an einen, mit seinem positiven Eingang ebenfalls geerdeten Differenzstrom-Verstärker angeschlossen. Insbesondere aus der US-A-4 276 510 ist ein Fehlerstromschutzschalter der eingangs genannten Art bekannt, bei dem eine Mittelanzapfung mit positiver Betriebsspannung verbunden ist. Die Wicklung ist in diesem Fall mit ihren Enden über Transistoren an ein Schaltnetzwerk angeschlossen, das mit Erdpotential verbunden ist.

Nachteilig ist bei den bekannten Anordnungen, daß bei einer in der Praxis möglichen Unterbrechung der Wicklung keine Sicherheit mehr gegeben ist.

Aufgabe der Erfindung ist es daher, die bekannte Schaltung dahingehend abzuändern, daß auch bei Unterbrechung der Wicklung ein Ansprechen des Fehlerstromschutzschalters und Abschaltung des elektrischen Netzes erfolgt.

Die Aufgabe ist erfindungsgemäß dadurch gelöst, daß die Mittelanzapfung über einen Widerstand an die positive Betriebsspannung angeschaltet ist und daß die Mittelanzapfung die Wicklung in solche Teilwicklungen aufteilt, deren Enden über Widerstände an die negative Betriebsspannung angeschaltet sind, wodurch in die Auswerteschaltung mit Differenzverstärker ein geeigneter Prüfstrom eingespeist wird. Vorzugsweise teilt die Mittelanzapfung die Wicklung mit vorgegebener Windungszahl in zwei Teilwicklungen von jeweils halber Windungszahl, wodurch der Prüfstrom sich symmetrisch über die Wicklungshälften aufteilt. Damit ist gewährleistet, daß der Kern durch den Prüfstrom nicht aufmagnetisiert wird.

Im Rahmen der Erfindung ist nunmehr sichergestellt, daß insbesondere bei Unterbrechung einer der Wicklungshälften ein Ansprechen des Differenzstromverstärkers erfolgt und daß bereits damit eine Abschaltung des elektrischen Netzes bewirkt werden kann. Speziell dadurch, daß sich bei der Unterbrechung der Wicklung das entsprechende Eingangspotential am Differenzverstärker in Richtung auf die negative Betriebsspannung verschiebt, während der andere Eingang in Richtung auf die positive Betriebsspannung verschoben wird, spricht der Differenzverstärker genauso wie bei einem Fehlerstrom an.

Weitere Einzelheiten und Vorteile der Erfindung ergeben sich aus der nachfolgenden Figurenbeschreibung eines Ausführungsbeispiels in Verbindung mit den Schutzansprüchen.

Es zeigen
- Figur 1: das Prinzip eines Summenstromwandlers,
- Figur 2: das zugehörige elektrische Ersatzschaltbild und
- Figur 3: eine verbesserte Auswerteschaltung für einen Differenzverstärker als Fehlerstromschutzschalter.

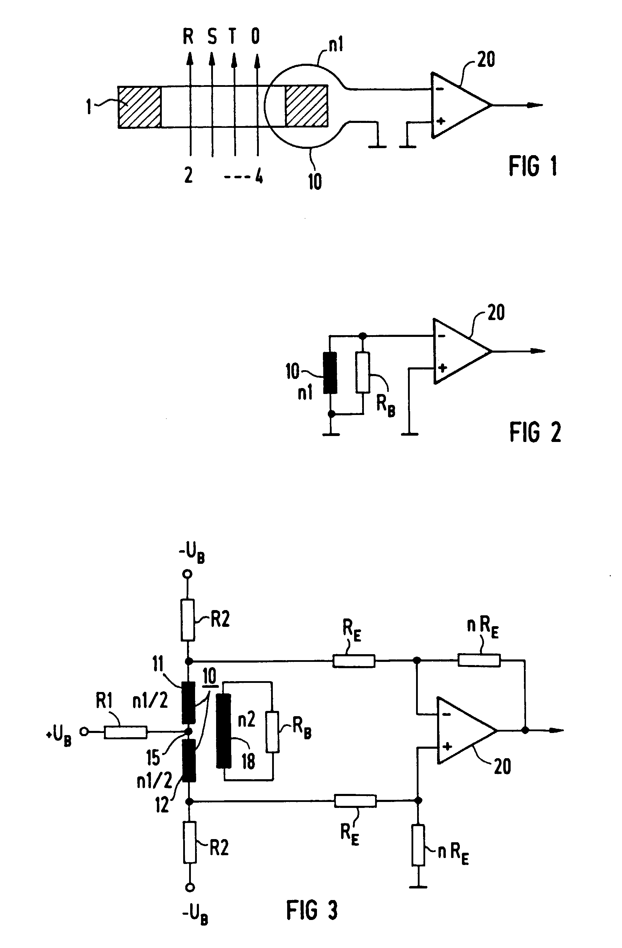

In Figur 1 ist ein Ringkern eines Summenstromwandlers mit 1 bezeichnet. Der Ringkern 1 umschließt elektrisch durchflossene Leiter 1 bis 4, beispielsweise die Phasenleiter R, S und T sowie den Nulleiter 0 eines elektrischen Netzes. Im Normalfall ergibt sich dabei der Summenstrom zu Null, was zu überwachen ist.

Der Ringkern 1 ist mit einer Wicklung 10 mit Windungszahl nl versehen, die eine Induktionsspule bildet. Das eine Ende der Wicklung 10 ist auf den Negativeingang eines DifferenzstromVerstärkers 20 geschaltet, wogegen das andere Ende ebenso wie der Pluseingang des Verstärkers 20 auf Erdpotential liegt.

Im elektrischen Ersatzschaltbild der Figur 2 ist die Wicklung mit vorgegebener Windungszahl nl als elektrische Induktivität mit zugehörigem Lastwiderstand R_{B} dargestellt, über welche ein Operationsverstärker als Differenzstromverstärker 20 angesteuert ist. Dessen Ausgangssignal liefert ein Steuersignal zum Abschalten des elektrischen Netzes.

In Figur 3 ist die Wicklung 10 der Figur 1 bzw. Figur 2 aus zwei Teilwicklungen 11 und 12 mit jeweils der halben Windungszahl von n1 gebildet und mit einer Mittelanzapfung 15 versehen, welche über einen Widerstand R1 an positive Betriebsspannung U_{B} geschaltet ist. Dagegen liegen die Enden der Teilwicklungen 11 und 12 jeweils über einen Widerstand R2 an negativer Betriebsspannung -U_{B}. Von Abzweigen vor den Widerständen R2 werden die Wicklungsenden entsprechend Figur 1 und 2 auf den Verstärker 20 geschaltet. Dafür sind Eingangswiderstände R_{E} in den Eingangsleitungen des Operationsverstärkers 20 vorhanden. In üblicher Weise ist dessen Ausgang über einen Widerstand n·R_{E} auf den negativen Eingang zurückgekoppelt und ist der positive Eingang über einen Widerstand n·R_{E} auf Erdpotential gelegt.

Zur Vervollständigung ist im Schaltbild gemäß Figur 3 noch eine Wicklung 18 mit Windungszahl n2 als Tertiärwicklung dargestellt, die an einen Widerstand R_{B} als Bürde angeschlossen ist.

Bei intakter Wicklung 10 verteilt sich der Strom durch R1 gleichmäßig auf beide Wicklungshälften 11 und 12, so daß der Ringkern 1 durch einen über die Betriebsspannung UB eingeprägten Prüfstrom nicht aufmagnetisiert wird. An den Wicklungsenden der Teilwicklungen 11 und 12 entsteht jeweils das gleiche Potential, so daß der Differenzverstärker 20 kein Ausgangssignal erzeugt. Geeigneterweise wählt man die Widerstände R2=2·R1, da in diesem Fall an den Eingängen des Differenzverstärkers 20 jeweils Nullpotential liegt.

Bei Unterbrechung einer der Wicklungshälften 11 und 12 der Sekundarspule 10 verschiebt sich das entsprechende Eingangspotential am Differenzverstärker 20 in Richtung auf -U_{B}, während der andere Eingang in Richtung auf +U_{B} verschoben wird. Dadurch wird bereits der Differenzverstärker 20 mit einer Potentialdifferenz angesteuert und erzeugt so ein Abschaltsignal.

Wenn dagegen durch die stromführenden Leitungen 1 bis 4 der Figur 1 ein Fehlerstrom entsteht, wird in den Wicklungshälften 11 und 12 jeweils ein Signal in gleicher Richtung erzeugt, das vom Differenzverstärker 20 in ein erdsymmetrisches Ausgangssignal zur Weiterverarbeitung umgesetzt wird. Da der Bürdenwiderstand R_{B} allgemein < R2 und < R_{E} ist, muß er an die zweite Wicklung 18 mit Windungszahl n2, die induktiv mit der Wicklung 10 um den Ringkern 1 zur Erfassung der Fehlerströme gekoppelt ist, angeschlossen werden.

Eine in der Praxis mögliche Unterbrechung der Wicklung 18 hat keinen Einfluß auf die Sicherheit der Schaltung, da dann schon bei kleinen Fehlerströmen eine Abschaltung erfolgt.

## Patentansprüche

1. Fehlerstromschutzschalter mit einem Summenstromwandler in Form eines mit einer Wicklung (10) versehenen Ringkernes (1) zum Umschließen stromdurchflossener Leiter (2 bis 4), wobei über die Wicklung (10) eine Auswerteschaltung mit einem Differenzverstärker (20) angesteuert wird und wobei die Wicklung (10) mit einer Mittelanzapfung (15) versehen ist, welche die Wicklung (10) in Teilwicklungen (11; 12) aufteilt und an positiver Betriebsspannung (+U_{B}) liegt, **dadurch gekennzeichnet,** daß die Mittelanzapfung (15) über einen Widerstand (R1) an die positive Betriebsspannung (++U_{B}) angeschaltet ist und daß die Mittelanzapfung (15) die Wicklung (10) in solche Teilwicklungen (11, 12) aufteilt, deren Enden über Widerstände (R2) an die negative Betriebsspannung (-U_{B}) angeschaltet sind, wodurch in die Auswerteschaltung mit Differenzverstärker (20) ein geeigneter Prüfstrom eingespeist wird.

2. Fehlerstromschutzschalter nach Anspruch 1, **dadurch gekennzeichnet,** daß die Mittelanzapfung (15) die Wicklung (10) mit vorgegebener Windungszahl (n1) in zwei Teilwicklungen (11, 12) von jeweils der halben Windungszahl (n1/2) aufteilt, wodurch sich der Prüfstrom symmetrisch über die Wicklungshälften aufteilt.

3. Fehlerstromschutzschalter nach Anspruch 1 ,**dadurch gekennzeichnet**, daß der Prüfstrom an den Enden der Wicklung (11, 12) vor den Widerständen (R2) abgegriffen wird.

4. Fehlerstromschutzschalter nach Anspruch 1 und Anspruch 2, **dadurch gekennzeichnet,** daß der Widerstand (R2) an den Enden der Wicklung (10) etwa doppelt so groß ist wie der Widerstand (R1) an der Mittelanzapfung (15) der Wicklung.

5. Fehlerstromschutzschalter nach Anspruch 1, **dadurch gekennzeichnet,** daß der Wicklung (10) mit den Teilwicklungen (11, 12) eine weitere Wicklung (18) zur induktiven Ankopplung eines Lastwiderstandes (R_{B}) zugeordnet ist.

## Claims

1. Residual-current-operated circuit-breaker having a summation current transformer in the form of a toroidal core (1) for surrounding current-carrying conductors (2 to 4), which toroidal core is provided with a winding (10), with an evaluating circuit with a differential amplifier (20) being triggered by way of the winding (10) and with the winding (10) being provided with a centre tap (15) which divides the winding (10) into part windings (11; 12) and to which positive operating voltage (+U_{B}) is applied, characterised in that the centre tap (15) is connected to the positive operating voltage (++U_{B}) by way of a resistor (R1), and in that the centre tap (15) divides the winding (10) into such part windings (11, 12), the ends of which are connected to the negative operating voltage (-U_{B}) by way of resistors (R2), as a result of which there is fed into the evaluating circuit with differential amplifier (20) a suitable testing current.

2. Residual-current-operated circuit-breaker according to claim 1, characterised in that the centre tap (15) divides the winding (10), which has a specified number of turns (n1), into two part windings (11, 12) each having half the number of turns (n1/2), as a result of which the testing current is divided symmetrically over the winding halves.

3. Residual-current-operated circuit-breaker according to claim 1, characterised in that the testing current is tapped at the ends of the winding (11, 12) in front of the resistors (R2).

4. Residual-current-operated circuit-breaker according to claim 1 and claim 2, characterised in that the resistor (R2) at the ends of the winding (10) is approximately twice as large as the resistor (R1) at the centre tap (15) of the winding.

5. Residual-current-operated circuit-breaker according to claim 1, characterised in that there is allocated to the winding (10) having the part windings (11, 12) a further winding (18) for the inductive coupling of a load resistor (R_{B}).

## Revendications

1. Disjoncteur à courant de défaut, ayant transformateur sommateur de courant sous forme de noyau toroïdal (1) muni d'un enroulement (10) pour entourer des conducteurs (2 à 4) parcourus par un courant, un circuit d'exploitation ayant un amplificateur différentiel (20) étant commandé par l'intermédiaire de l'enroulement (10) et l'enroulement (10) étant muni d'une prise médiane (15) qui divise l'enroulement (10) en enroulements partiels (11 ; 12) et à laquelle s'applique une tension de service positive (+ U_{B}), caractérisé par le fait que la prise médiane (15) est raccordée par l'intermédiaire d'une résistance (R1) à la tension de service positive (+ U_{B}) et que la prise médiane (15) divise l'enroulement (10) en des enroulements partiels (11, 12) dont les extrémités sont raccordées par l'intermédiaire de résistances (R2) à la tension de service négative (- U_{B}), grâce à quoi un courant d'essai approprié est injecté dans le circuit d'exploitation comportant un amplificateur différentiel (20).

2. Disjoncteur à courant de défaut selon la revendication 1, caractérisé par le fait que la prise médiane (15) divise l'enroulement (10) ayant un nombre prescrit (n1) de spires en deux enroulements partiels (11, 12) ayant chacun une moitié (N1/2) du nombre de spires, le courant d'essai se répartissant ainsi symétriquement sur les moitiés d'enroulement.

3. Disjoncteur à courant de défaut selon la revendication 1, caractérisé par le fait que le courant d'essai est prélevé aux extrémités de l'enroulement (11, 12) avant les résistances (R2).

4. Disjoncteur à courant de défaut selon les revendications 1 et 2, caractérisé par le fait que la résistance (R2) aux extrémités de l'enroulement (10) est approximativement deux fois plus grande que la résistance (R1) à la prise médiane (15) de l'enroulement.

5. Disjoncteur à courant de défaut selon la revendication 1, caractérisé par le fait qu'il est associé à l'enroulement (10) ayant les enroulements partiels (11, 12) un autre enroulement (18) destiné au couplage inductif d'une résistance de charge (R_{B}).
